# EUROPEAN PATENT SPECIFICATION

(11) **EP 0 503 302 B1**
(45) Date of publication and mention of the grant of the patent: **17.07.1996**
(21) Application number: 92102465.9
(22) Date of filing: 14.02.1992
(51) Int. Cl.: A21D 13/00

(54) **Microwave reconstitution of frozen pizza**
Wiederherstellung einer tiefgefrorenen Pizza mittels Mikrowellen
Reconstitution par micro-onde d'une pizza congelée

(30) Priority: 11.03.1991 US 666943
(43) Date of publication of application: 16.09.1992
(73) Proprietor: SOCIETE DES PRODUITS NESTLE S.A., CH-1800 Vevey (CH)
(72) Inventor: Peleg, Yigal, Solon, OH 44139 (US)

(56) References cited:
- EP-A- 0 340 037
- EP-A- 0 481 249
- DE-A- 2 342 422
- DE-C- 589 441
- FR-A- 981 242
- GB-A- 2 131 666
- US-A- 1 388 019
- US-A- 2 227 063
- US-A- 4 252 832
- US-A- 4 552 776
- US-A- 4 891 482
- US-A- 4 963 376
- US-A- 4 968 522

## Description

### Disclosure

This invention relates to the art of reconstituting a frozen food entree having a crust, such as a frozen pizza by using microwave energy and more particularly to microwave reconstitution of frozen pizza so that the pizza has a browned crust in the areas not directly contacted by a hot susceptor sheet used in the normal microwave reconstitution of frozen pizza.

### INCORPORATION BY REFERENCE

The following United States patents, Brastad U.S. Pat. Nos. 4,230,924; 4,267,420; Maroszek U.S. Pat. No. 4,594,492; Brown U.S. Pat. No. 4,626,641; Seiferth U.S. Pat. No. 4,641,005; and, Keefer 4,656,325, relate to prior art concepts for incorporating special sheet material with a foodstuff cooked in a microwave oven to assist in the cooking of refrigerated and/or frozen foodstuffs. These patents constitute a portion of the patented prior art for background of the present invention so that details known in the art need not be repeated to understand the present invention and its novelty. Jaeger US-A-4,891,482 disclosing a heating sleeve formed from microwave susceptor material for reconstituting elongated sections of pizza incorporating a French bread type crust portion. This prior patent discloses the use of a susceptor sheet for reconstituting frozen pizza wherein the susceptor sheet is wrapped completely around the pizza in the form of a self-standing tubular receptacle or sleeve. This particular receptacle is inappropriate for the common round pizza which has heretofore been heated on a pedestal of microwave susceptor material.

### BACKGROUND OF INVENTION

The present invention is directed to a novel method of making a small, round frozen pizza to be reconstituted by microwave heating, the resulting microwave reconstitutionable pizza and the method of reconstitution of the frozen pizza. Frozen pizza is normally sold in a circular shape from the frozen section of a retail grocery outlet. This type of pizza product includes a lower crust portion with a generally flat bottom surface and an upper generally flat surface parallel to the bottom surface with a generally curved marginal portion between the parallel surfaces and extending around the periphery of the pizza. This marginal portion joins the two parallel surfaces forming the crust section upon which the normal sauces and other topping items are deposited to form the final pizza. After the pizza has been produced and frozen, it is distributed for such retail distribution. The pizza is to be reconstituted by subsequently thawing and baking. The present invention is directed to this type of mass produced, normally small, consumer pizza which is to be subsequently reconstituted by the customer.

The invention is particularly applicable for use in reconstituting frozen pizzas and it will be described with particular reference thereto; however, it may be used for reconstituting other frozen products formed from a crust material wherein a portion of the crust can not be contacted by a lower supporting surface of microwave susceptor material for the purpose of browning the crust area spaced from the hot susceptor material.

When manufacturing a frozen pizza, a lower farinaceous crust layer in the form of a circular, flat portion is used to support upper topping material formed from a combination of various substances including cheese, tomato sauce, meat and other food items. The topping material is added in an uncooked, often frozen condition onto the upper surface of the crust material in the manufacture of the pizza. The crust sometimes is partially baked for subsequent final baking by the customer. One of the basic requirements of a frozen pizza which is to be reconstituted by a customer is that the crust portion of the pizza has a taste and texture which is the same as convection oven baked pizza. In the past, such condition was generally obtained by thawing the pizza and then baking the pizza in a convection oven to accomplish the desired reconstituted appearance, texture and condition. Due to the starch and other characteristics of the lower crust layer of the pizza, it has been found that high quality reconstitution can be accomplished only by heating in a convection oven or at least combining thawing in a microwave oven and then final baking and browning in a convection oven. Attempts to reconstitute pizza by only microwave heating, a concept now popular with and demanded by the public, have not been commercially satisfactory primarily because the microwave reconstitution of pizza involves placing the lower surface of the pizza on a platform or pedestal formed from a microwave susceptor material. This material, as is well known, is heated by microwave energy to a substantially elevated temperature approaching 148.9-204.4°C (300-400°F.) Consequently, the lower surface of the pizza in direct contact with the hot susceptor sheet is browned and made crisp by the high temperature heat conduction directly from the lower microwave susceptor material. The rest of the pizza is adequately heated by microwave energy; however, those portions of the crust which are not covered by topping material and are visually exposed to the customer do not become browned. The crust has a pale appearance. Although the microwave heating procedure wherein the pizza is placed upon a susceptor pedestal causes heating of the crust to a temperature sufficient for baking the crust, the temperature is not sufficient for browning the crust except at the lower surface, which is in direct heat contact with the upper hot surface of the microwave susceptor pedestal. Consequently, attempts to bake, cook or otherwise reconstitute frozen pizza in a microwave oven has not been commercially acceptable except when employing the invention described in Jaeger 4,891,482, which invention can be used only for pizza using a French bread crust. The use of a susceptor sheet around the total pizza is costly. Consequently, there is a definite need for a procedure that renders microwave reconstituted pizza which is heated on a pedestal of microwave susceptor material and is still acceptable to the consumer.

### THE INVENTION

The present invention relates to a method of making a microwave reconstitutionable pizza which overcomes the disadvantages of prior pizzas which necessitated a combination of microwave thawing and convection oven final baking of circular, frozen pizza mass produced for retail outlets.

In accordance with the present invention there is provided a method of making a microwave reconstitutionable frozen pizza having a preselected outer periphery, a lower crust with a generally flat bottom surface, an upper generally flat surface parallel to the lower surface and a generally curved marginal portion around the periphery of the pizza and joining the parallel surfaces of the crust. The method of the present invention is characterised in that it comprises the steps of depositing food topping onto the upper surface in a selected area having an outermost border generally matching the periphery of the pizza and exposing an outer band of visually exposed crust above the bottom surface of the pizza and coating the outer crust band with a liquid crust coloring substance. This substance may change in color or tint as it is heated during partial cooking of the pizza. This substance can be referred to as a microwave browning substance since it causes an appearance of normally a browned crust. The substance may be added to the pizza crust and then partially cooked or baked. This would produce the desired brown tint to the exposed crust. Preferably the color of the substance gives the tint without baking. Said crust coloring substance is an aqueous solution of an edible dispersing agent and a natural occurring color agent selected from the class consisting of coffee, tea, chicory and mixtures thereof.

By coating the exposed crust portion above the lower flat crust surface of the pizza with the coloring substance and then heating the crust, this visually exposed portion of the crust has a brown color generally indistinguishable from a naturally browned crust of a pizza. Indeed, when the pizza is reconstituted by placing it upon a microwave susceptor sheet, the microwave energy cooks the pizza to the desired condition, while the hot flat microwave susceptor sheet browns the lower portion of the pizza crust. The liquid crust coloring substance covers the visually exposed crust band around the pizza so that it is visually acceptable to a customer. It has been found by using this invention, a round frozen pizza can be completely reconstituted by microwave energy in a microwave oven without baking the pizza in a standard convection oven, while still obtaining the desired visual and textural qualities desired by discriminating customers.

In accordance with a limited aspect of the present invention, the edible dispersing agent is selected from the class consisting of liquid margarine, milk, milk powder, egg whites, egg white powder. Further, the liquid crust coloring substance, or browning agent, is sprayed onto the exposed portion of the crust during manufacturing of the pizza and before the pizza is cooked and frozen. Thus, when the pizza is sold in a retail outlet, it is removed from the package, placed upon a specifically constructed paper board pedestal structure having an upper microwave susceptor layer and located in a microwave oven. The microwave oven is energized to heat the pizza by microwave energy. The susceptor sheet becomes extremely hot. This hot susceptor sheet engages the flat undersurface of the crust portion of the pizza and browns the crust in accordance with standard practice. The liquid coloring substance tints the exposed portion of the crust a brown color mimicking an oven browned crust of a pizza. The coloring substance can be referred to as a "browning agent" because it produces an oven brown color for the exposed portion of the crust of the pizza. The tint is controlled by the amount of coloring agent in the coloring substance and, to a lesser extent, the baking temperature. Indeed, during the microwave heating the color may become slightly darker then the prebaked tint; however, this is not necessary since the amount of coffee, tea and/or chicory is selected to produce the desired brown tint matching the color of convection baked pizza crust.

In accordance with yet another aspect of the invention, the liquid crust coloring substance includes an aqueous solution of liquid margarine and either instant tea or instant coffee with the instant tea or coffee being about 3-10% by weight of the solution. In this manner, the water evaporates either during a heating process in the manufacture of the pizza or during the microwave heating of the pizza during reconstitution of the product.

In accordance with another aspect of the present invention there is provided a microwave reconstitutionable frozen pizza having the characteristics obtained by the above explained method. Further, the invention involves a method of reconstituting a microwave reconstitutionable frozen pizza having the visually exposed portion of the crust coated with the above defined liquid crust coloring substance.

Food colouring is well known from the food industry. US-A-4 522 776 relates to a process for enhancing tea beverage colour and US-A-4 968 522 describes a browning agent for food stuff having a carbony-containing reactant providing browning upon heating.

It is known to use a caramel substance on the skin of chicken and other poultry items for the purpose of causing the skin to have a brown appearance after microwave heating of the coated chicken, turkey or other poultry item. There has been no use of this type browning agent to solve the problem confounding for years the frozen pizza producers. This problem is the fact that microwave reconstituted pizza using a susceptor sheet for browning the undersurface of the pizza produces a pale exposed crust portion around the pizza, that is not conducive to acceptance by discriminating customers. For that reason, round frozen pizzas have normally been thawed in the microwave oven and then baked in a convection oven to brown the crust. This particular problem was overcome for a pizza on a French bread by using a susceptor sleeve; however, a sleeve is not economical or practical for a round pizza. As is known, by increasing the price of the susceptor sheet by only a few cents per carton, the profitability of a frozen, mass produced product can be drastically altered. The present invention overcomes the problem of producing a microwave reconstitutionable pizza heatable on a susceptor platform or pedestal and still obtaining the desired brown crust demanded by the public.

The primary object of the present invention is the provision of a method of making a microwave reconstitutionable frozen pizza which can be reconstituted solely by microwave heating, while the pizza is placed upon a microwave susceptor sheet which browns the lower surface of the pizza, which method involves providing a coating on the visually exposed crust portion of the pizza so that the pizza appears to have an oven browned crust surface, which coating is a liquid crust coloring substance formed from a natural occurring agent selected from the class consisting of coffee, tea, chicory and mixtures thereof.

The present invention has been practiced by applicant with other browning agents not developed by applicant; therefore, another object of the present invention is the provision of the specific crust coloring substance which can be used for coloring crust that is not directly contacted by a microwave susceptor material during the microwave reconstitution of the crust portion of a food product, such as pot pies and/or pizzas.

Still a further object of the present invention is the provision of a microwave reconstitutionable frozen pizza having an outer band portion of the crust coated by a substance which colors the exposed crust portion to a color simulating an oven baked crust.

These and other objects and advantages will become apparent from the following description taken together with the accompanying drawings.

### BRIEF DESCRIPTION OF THE DRAWINGS

FIGURE 1 is a pictorial view of a pizza produced by the present invention resting upon a paper board pedestal having an upper surface formed by microwave susceptor material, which upper surface contacts the lower flat surface of the pizza crust;
FIGURE 2 is an enlarged cross-sectional view, taken generally along line 2-2 of FIGURE 1;
FIGURE 3 is a bottom view of the embodiment shown in FIGURE 1, with certain portions of the pedestal shown in phantom lines in their unfolded positions;
FIGURE 4 is a pictorial view of the pedestal as it is placed in a frozen pizza package before it has been formed into a heating pedestal;
FIGURE 5 is a view similar to FIGURE 4 showing an initial pedestal assembly step;
FIGURE 6 is an enlarged cross-sectional view taken generally along lines 6-6 of FIGURE 4;
FIGURES 7A-7D are cross-sectional views of a pizza made in accordance with the present invention illustrating certain operations performed during the manufacturing process; and,
FIGURE 8 is a side elevational view of a frozen pizza constructed in accordance with the present invention.

### PREFERRED EMBODIMENT

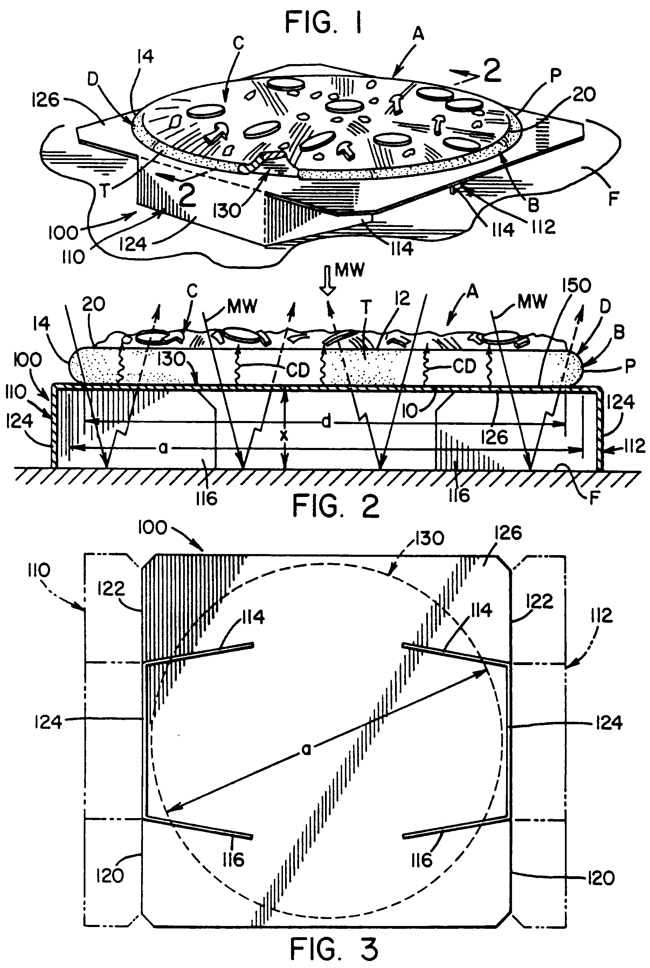

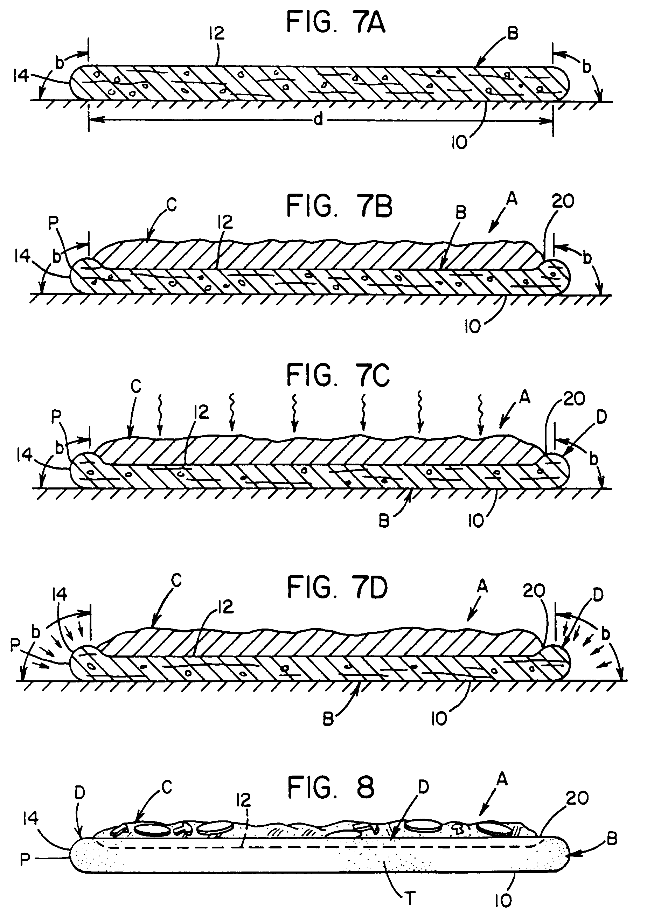

Referring now to the drawings, wherein the showings are for the purpose of illustrating a preferred embodiment of the invention only and not for the purpose of limiting same, FIGURES 1-6 illustrate a pizza A manufactured in accordance with the present invention. This pizza is preferably circular in shape and has an outer circular periphery P around the pizza. Of course, the pizza could have various shapes. In mass production of frozen pizza to which the present invention is directed, the circular shape is preferred. The diameter a of pizza A is approximately 20.32 cm (8.0 inches) and is sold in an individual box on which is printed the desired baking procedures for reconstitution of the frozen pizza into a hot pizza ready for service and consumption. Pizza A, except for the addition of the present invention, is somewhat standard and includes a lower crust portion B which is a kneaded and rolled dough section formed into a shape having a generally flat bottom surface 10 and a parallel generally flat upper surface 12, best shown in FIGURE 7A. A curved marginal portion 14 extends around the periphery P and between parallel surfaces 10, 12 to complete the outer visually exposed surface of dough portion B of pizza A. In accordance with standard practice, crust portion B is covered with a topping C including sauces, cheese and a variety of pizza forming constituents deposited onto upper surface 12 in an area with an outer border 20 generally matching the circular periphery P, but spaced inward thereof to define the outer visually exposed crust band D. This exposed crust is between the parallel surfaces and can be defined by the included angle b as shown in FIGURES 7A-7D. Consequently, band D is the exposed crust area above bottom surface 10 and including border 12. This visually exposed area of crust portion B is treated in accordance with the present invention to produce novel pizza as shown in FIGURE 8 and in FIGURES 1 and 2.

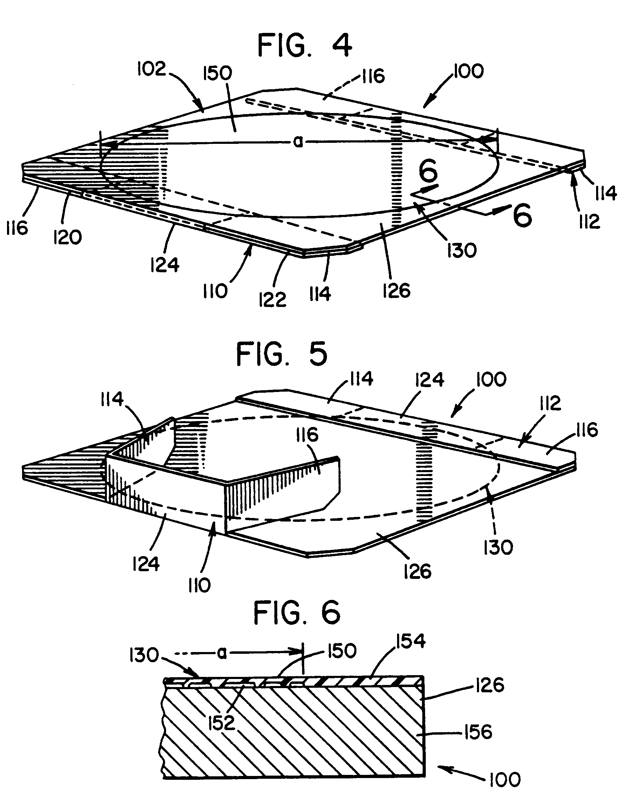

To heat pizza A manufactured in accordance with the present invention, there is provided a platform 100 formed from rigid paper board and packaged with pizza A in an initially flat, folded blank 102, best shown in FIGURE 4. Platform or pedestal 100 is used to support pizza A above floor F of a microwave heating oven a preselected distance x which, in practice, is approximately 2.54-0.32 cm (1-1/8 inches). This lower spacing allows the microwave energy, indicated as arrows MW, to pass through the pizza and be reflected from floor F. In addition, microwave energy from the side of platform 100 can engage floor F and pass upwardly through platform 100 and then into the crust portion B of pizza A. The platform is spaced above floor F of a microwave oven so that the susceptor sheet at the upper surface 126 can be directly penetrated by microwave energy. This penetration causes heating of the susceptor sheet in accordance with standard practice. Platform 100 could have various forms; however, in practice, it includes inwardly folded flaps 110, 112 with outwardly extending, separate tabs 114, 116 defined by cuts 120, 122 defining integral support legs 124. As shown in FIGURES 3 and 4, the flat folded blank 102 is the initial form of platform 100. In this knocked down, flat condition, the platform can be shipped in the carton with the microwaveable pizza A without consuming valuable carton or package space. Thus, pizza A is shipped in a frozen condition with a blank 102.

When a customer purchases a carton containing pizza A and folded blank 102, the frozen pizza is removed from the carton and platform 100 is formed, as shown in FIGURES 1 and 2. Flaps 110, 112 are folded outwardly to be orthogonal with top sheet 126. Then tabs 114, 116 of flaps 110, 112 are folded inwardly as shown in FIGURE 5. This rigidifies integral legs 124 and provides support for upper, or top sheet, 126 upon which pizza A is placed as shown in FIGURE 2. The frozen pizza A is now in position within the microwave oven for complete reconstitution by microwave energy. There is no need for microwave thawing and then final baking in a standard convection oven when using the present invention. Pizza A, made in accordance with the present invention, produces a completely microwaveable frozen pizza that can be directly placed in a microwave oven and reconstituted directly from its frozen condition. This is a drastic and substantial improvement in the art of marketing small, round pizzas and presents tremendous marketability and consumer acceptance of pizza A.

To brown the lower surface 10 of pizza A, upper or top sheet 126 is provided with a standard microwave susceptor material in a circular pattern defined as area 130 on top sheet 126, as shown in FIGURE 4 and in dotted lines in FIGURES 3 and 5. Diameter a of area 130 is selected to provide sufficient heating area to contact lower flat surface 10 of crust portion B of the pizza. Thus, the diameter of area 130 generally matches diameter d of lower surface 100. In practice, the area 130 of microwave susceptor material is substantially greater in size than the lower surface of the crust portion B to assure that the total crust portion rests upon and contacts area 130. If the pizza is somewhat misaligned or various sized pizzas are sold with the same platform 100, the total lower surface 10 of the pizza is in heat transfer contact with the microwave susceptor material of area 130. Of course, the total top sheet 126 could be formed with microwave susceptor material; however, this is not done in practice to reduce the cost of platform 100 and to provide an outer boundary of this platform which does not heat to a substantially elevated temperature.

Heating area 130 is formed from a standard susceptor material schematically illustrated in FIGURE 6. Susceptor portion 150 in area 130 includes vapor deposited elemental aluminum 152 on the back surface of plastic film 154 which film is adhered to support paper board 156 in accordance with standard practice. Of course, any types of susceptor technology could be employed at area 130. FIGURE 6 is only representative in nature to show the type of material normally anticipated in a microwave susceptor sheet. Film 154 is selected for heat resistivity so that it will not crack and will protect the food from the layer of deposited elemental aluminum 152. As microwave energy passes through the elemental aluminum layer 152 from either the top or bottom, eddy currents are created in the aluminum layer to create high temperatures. Thus, area 130 becomes extremely hot during exposure of susceptor material 150 to microwave energy. The amount of heat is controlled by the surface resistivity of layer 152, which resistivity is selected to produce a temperature in the general range of 204.4°C (400°F). This temperature will brown lower surface 10 of crust portion B by direct conduction heating of the crust surface as it is in contact with area 130. As the microwave energy passes through area 130, as shown in FIGURE 2, the susceptor material reaches an elevated temperature. This causes conduction heating CD at the crust portion B. Thus, the crust is baked as well as browned and made crisp on the bottom surface. As so far described, only the bottom surface 10 of crust B is browned to the desired appearance. The microwave energy from the top will thaw and cook the pizza to obtain the desired texture. Energy from floor F also cooks the total pizza. The difficulty is that the visually exposed portion defined as band D at included angle b shown in FIGURES 7A-7D is not browned by the microwave. Thus, a microwave reconstituted frozen pizza as so far explained is not commercially acceptable from a marketing standpoint. The band D which is sufficiently cooked by conduction and microwave energy has the proper texture, but not the required browned tint, which tint is obtainable by reconstituting a frozen pizza in a standard convection oven, but not in a microwave oven. The present invention overcomes this difficulty by providing a browned crust in band D.

In accordance with the present invention, the pizza A as shown in FIGURE 8 is manufactured generally as illustrated in FIGURES 7A-7D. First, dough is cut into a circular shape and rolled into a flat condition, as shown in FIGURE 7A. The sequence of cutting and rolling is immaterial. After the dough is prepared for crust portion B, topping C is applied onto surface 12. There may be a slight indentation in the top of the pizza, as shown in FIGURE 7B. The topping material C is sauce, cheese and other food items, which items may be frozen or precooked. After the pizza has been assembled as shown in FIGURE 7A, it is heated in a standard convection oven as schematically illustrated in FIGURE 7C. Thus, the pizza is precooked and ready for final baking. In accordance with the present invention, a liquid crust coloring substance is sprayed onto the crust band D, which is the visually exposed area of crust portion B between topping C and the lower flat surface 10. This coating can be applied before the heating process as shown in FIGURE 7C. Thus, the crust coloring substance would be preheated and possibly darkened during the convection heating process for pizza A. Irrespective of the process employed, the crust coloring substance is applied to the peripheral band D for the purpose of imparting to this area a selected brown condition acceptable for the final reconstituted pizza. Thus, pizza A has a tint T around the visual exposed surface areas of crust portion B, as schematically illustrated in FIGURE 8.

By using the liquid crust coloring substance, pizza A can then be frozen, shipped and stored for reconstitution by a microwave oven explained with respect to FIGURE 2. This reconstituted pizza has an outer browned surface for the crust portion B, due to the presence of the liquid coloring substance. The liquid substance is applied to the pizza, in practice, preparatory to the heating operation set forth in FIGURE 7C so that the liquid substance is evaporated to leave a deposited layer of a brown substance on crust B. This color of the brown substance can be controlled to provide a desired tint T acceptable to the marketing demands of a completely microwave reconstituted frozen pizza.

In accordance with the invention, the presently employed liquid crust coloring substance is 5% instant coffee, 45% water and 50% liquid margarine. Another preferred embodiment for the liquid crust coloring substance is 5% instant tea (Nestea) 45% water and 50% liquid margarine. Application on an 20.3 cm (8.0 inch) pizza is approximately 1.0 grams per pizza. When this same substance is used on the upper surface of a meat pie, 0.40 grams of the liquid substance is employed. After application, the crust portion of the food item is heated to evaporate the water and deposit the coloring substance onto the exposed crust portion. The convection heating during manufacturing of the frozen product, shown in FIGURE 7C, can change the brown tint T or the substance itself can have the desired color.

As a broader aspect of the invention, the liquid crust coloring substance includes as the coloring agent coffee, coffee extracts, spray dried coffee, freeze dried coffee, chicory, chicory extract, spray dried chicory, freeze dried chicory, tea, tea extracts, spray dried tea, and freeze dried tea. These substances can be regular or decaffeinated and are dispersed within an aqueous solution by margarine, milk, milk products, egg whites, and/or egg white powders. By using these dispersing agents, a product, such as a pizza shell, or pie crust will allow the microwave cooked shell or crust to look brown rather than pale; therefore, the appearance of the resulting microwave constituted crust portion will have the appearance of a convection cooked or baked product.

Of course, this browning agent or liquid crust coloring substance could be used to enhance the brown appearance of a conventional oven baked or cooked product. The degree of induced browning or brown appearance can be adjusted by the dosage of the browning agent, the cooking time, and the cooking temperature chosen. Thus, as the product is cooked preparatory to freezing as indicated in FIGURE 7C, the desired tint T is imparted to the exposed area of crust portion B.

In practice, pizza A can be totalled reconstituted in a microwave. In an oven having a rating of 600-700 watts, the microwave oven should be set at full power for 2.0 minutes. Then the pizza should be rotated on the microwave crisper or platform 180°. Then the microwave oven should continue to heat pizza P for 2-3 minutes at full power. Thus, in a microwave oven rated at 600-700 watts the pizza is cooked in 4-5 minutes. If a lower power unit is employed, such as 400-500 watts, the pizza should be heated at full power for 3.0 minutes. Thereafter, the pizza should be rotated on the crisper 180° and heated additional 3-4 minutes at full power. Thus, the pizza is heated in 6-7 minutes with a low power microwave oven.

In practice, crust portion B is precooked or baked in the round form. Then topping C is added and the crust coloring substance or browning agent is sprayed onto the marginal band D. There is no heating of the pizza as shown in FIGURE 7C. The pizza is immediately frozen for shipment. It is more economical to spray or coat the top surface 12 with the liquid crust coloring substance before adding the topping C, indeed, the whole surface 12 can be coated. The preferred embodiment coats only the exposed band D because it is a savings of the coloring substance or browning agent, which savings is more than the decrease in processing cost by coating the whole or most of surface 12. Consequently, when the invention is defined as coating the visually exposed area of crust portion B, it can be done by coating the surface 12 and then defining band B by depositing topping C.

## Claims

1. A method of making a microwave reconstitutionable frozen pizza having a preselected outer periphery, a lower crust with a generally flat bottom surface (10), an upper generally flat surface (12) parallel to said lower surface (10) and a generally curved marginal portion (14) around said periphery and joining said parallel surfaces of said crust, characterised in that said method comprises the steps of:
(a) depositing food topping onto said upper surface (12) in a selected area having an outermost border generally matching said periphery and exposing an outer crust band (D) above said bottom surface (10) and including said marginal portion of said crust,
(b) coating said outer crust band (D) with a liquid crust coloring substance including an aqueous solution of an edible dispersing agent and a natural occurring coloring agent selected from the class consisting of coffee, tea, chicory and mixtures thereof; and,
(c) freezing the pizza for storage and/or shipment.

2. The method as defined in claim 1 wherein said edible dispersing agent is selected from the class consisting of liquid margarine, milk, milk powder, egg whites and egg white powder.

3. The method as defined in claim 1 wherein said coating step includes spraying said liquid crust coloring substance onto said outer crust band.

4. The method as defined in claim 1 including the additional step of at least partially baking said pizza whereby said substance is evaporated and converted to the desired brown tint.

5. The method as defined in claim 1 wherein said liquid crust coloring substance includes an aqueous solution of margarine and instant coffee with said instant coffee being about 3-10% by weight of said solution.

6. The method as defined in claim 1 wherein said liquid crust coloring substance includes instant tea with said instant tea being about 3-10% by weight of said solution.

7. A microwave reconstitutionable frozen pizza having a preselected outer periphery, a lower crust with a generally flat bottom surface (10), an upper generally flat surface (12) parallel to said upper surface and a generally curved marginal portion (14) around said periphery and joining said parallel surfaces of said crust, characterised in that said pizza includes a food topping deposited onto said upper surface (12) in a selected area having an outermost border generally matching said periphery and exposing an outer crust band above (D) said bottom surface (10) and including said marginal portion of said crust and a liquid crust coloring substance coated onto said outer crust band, said crust coloring substance includes an aqueous solution of an edible dispersing agent and a natural occurring coloring agent selected from the class consisting of coffee, tea, chicory and mixtures thereof.

8. A microwave reconstitutionable pizza as defined in claim 7 wherein said edible dispersing agent is selected from the class consisting of liquid margarine, milk, milk powder, egg whites and egg white powder.

9. A microwave reconstitutionable pizza as defined in claim 7 wherein said pizza is at least partially baked.

10. A microwave reconstitutionable pizza as defined in claim 7 wherein said liquid crust coloring substance includes an aqueous solution of margarine and instant coffee with said instant coffee being about 3-10% by weight of said solution.

11. A microwave reconstitutionable pizza as defined in claim 7 wherein said liquid crust coloring substance includes instant tea with said instant tea being about 3-10% by weight of said solution.

12. A method of reconstituting a microwave reconstitutionable frozen pizza in a microwave oven with a lower flat floor said pizza having a preselected outer periphery, a lower crust with a generally flat bottom surface (10), an upper generally flat surface (12) parallel to said upper surface and a generally curved marginal portion (14) around said periphery and joining said parallel surfaces of said crust, characterised in that said pizza includes a food topping onto said upper surface in a selected area having an outermost border generally matching said periphery and exposing an outer crust band (D) above said bottom surface and including said marginal portion of said crust and a liquid crust coloring substance including an aqueous solution of an edible dispersing agent and a natural occurring colouring agent selected from the class constituting of coffee, tea, chicory and mixtures thereof, said liquid crust colouring substance is coated onto said outer crust band, said method comprising the steps of:
(a) placing a flat microwave susceptor sheet in said microwave oven at a location above and parallel to said lower flat floor;
(b) placing said pizza onto said susceptor sheet with said sheet engaging only said lower flat surface of said crust; and,
(c) energizing said microwave oven to heat said frozen pizza by a combination of microwave energy and convection heating by said susceptor sheet at said lower surface only.

13. The method as defined in claim 12 wherein said microwave heating step includes heating said pizza for about 4-7 minutes.

14. The method as defined in claim 12 wherein said microwave oven has a rating of 600-700 watts and said microwave heating step includes heating said pizza for about 4-5 minutes.

15. The method as defined in claim 14 including the steps of rotating said pizza in said microwave oven at least about 1/2 revolutions once during said microwave heating step.

16. The method as defined in claim 14 wherein said microwave oven has a rating of 400-500 watts and said microwave heating step includes heating said pizza for about 6-7 minutes.

17. The method as defined in claim 16 including the steps of rotating said pizza in said microwave oven at least about 1/2 revolutions once during said microwave heating step.

18. Use of a liquid crust coloring substance including an aqueous solution of an edible dispersing agent and a natural occurring coloring agent selected from the class consisting of coffee, tea, chicory and mixtures thereof. for coating onto the exposed crust areas of a crust type frozen food product to be microwave reconstituted.

19. Use of a liquid crust coloring substance as defined in claim 18 wherein said edible dispersing agent is selected from the class consisting of liquid margarine, milk, milk powder, egg whites and egg white powder.

20. Use of a liquid crust coloring substance as defined in claim 18 wherein said liquid crust coloring substance includes an aqueous solution of margarine and instant coffee, with said instant coffee being about 3-10% by weight of said solution.

21. Use of a liquid crust coloring substance as defined in claim 18 wherein said liquid crust coloring substance includes instant tea, with said instant tea being about 3-10% by weight of said solution.

## Patentansprüche

1. Verfahren zum Herstellen einer mikrowellenrekonstituierbaren Tiefkühlpizza mit einem vorgewählten äußeren Umfang, einer unteren Kruste mit einer allgemein flachen Bodenoberfläche (10), einer oberen allgemein flachen Oberfläche (12) parallel zur unteren Oberfläche (10) und einem allgemein gekrümmten Randabschnitt (14) um den Umfang herum, welcher die parallelen Oberflächen der Kruste verbindet, dadurch gekennzeichnet, daß das Verfahren die Schritte umfaßt:
(a) Ablagern eines Nahrungsmittelbelages auf der oberen Oberfläche (12) in einem ausgewählten Bereich, der eine äußerste Grenze hat, welche mit dem genannten Umfang allgemein zusammenpaßt, ein äußeres Krustenband (D) oberhalb der Bodenoberfläche (10) freigibt und den Randabschnitt der Kruste beinhaltet,
(b) Beschichten des äußeren Krustenbandes (D) mit einer flüssigen Krustenfärbesubstanz, welche eine wäßrige Lösung eines eßbaren Dispergiermittels und eines natürlich auftretenden Färbemittels enthält, das aus der Klasse bestehend aus Kaffee, Tee, Zichorie und deren Mischungen ausgewählt ist; und
(c) Einfrieren der Pizza zur Lagerung und/oder zum Versand.

2. Verfahren nach Anspruch 1, bei welchem das eßbare Dispergiermittel aus der Klasse bestehend aus flüssiger Margarine, Milch, Milchpulver, Eiweiß und Eiweißpulver ausgewählt ist.

3. Verfahren nach Anspruch 1, bei welchem der Beschichtungsschritt das Aufsprühen der flüssigen Krustenfärbesubstanz auf das äußere Krustenband umfaßt.

4. Verfahren nach Anspruch 1, mit dem zusätzlichen Schritt des zumindest teilweisen Backens der Pizza, wodurch die Substanz verdampft und in die gewünschte braune Färbung umgewandelt wird.

5. Verfahren nach Anspruch 1, bei welchem die flüssige Krustenfärbesubstanz eine wäßrige Lösung aus Margarine und Instantkaffee enthält, wobei der Instantkaffee etwa 3-10 Gew.-% der Lösung ausmacht.

6. Verfahren nach Anspruch 1, bei welchem die flüssige Krustenfärbesubstanz Instanttee enthält, wobei der Instanttee etwa 3-10 Gew.-% der Lösung ausmacht.

7. Mikrowellenrekonstituierbare Tiefkühlpizza mit einem vorgewählten äußeren Umfang, einer unteren Kruste mit einer allgemein flachen Bodenoberfläche (10), einer oberen allgemein flachen Oberfläche (12) parallel zur genannten Bodenoberfläche und einem allgemein gekrümmten Randabschnitt (14) um den Umfang herum, welcher die parallelen Oberflächen der Kruste verbindet, dadurch gekennzeichnet, daß die Pizza einen Nahrungsmittelbelag aufweist, welcher auf der oberen Oberfläche (12) in einem ausgewählten Bereich abgelagert ist, der eine äußerste Umgrenzung aufweist, welche mit dem genannten Umfang allgemein zusammenpaßt, ein äußeres Krustenband (D) oberhalb der Bodenoberfläche (10) freigibt und den Randabschnitt der Kruste beinhaltet, und wobei das äußere Krustenband mit einer flüssigen Krustenfärbesubstanz beschichtet ist, wobei die Krustenfärbesubstanz eine wäßrige Lösung eines eßbaren Dispergiermittels und eines natürlich auftretenden Färbemittels enthält, das aus der Klasse bestehend aus Kaffee, Tee, Zichorie und deren Mischungen ausgewählt ist.

8. Mikrowellenrekonstituierbare Pizza nach Anspruch 7, bei welcher das eßbare Dispergiermittel aus der Klasse bestehend aus flüssiger Margarine, Milch, Milchpulver, Eiweiß und Eiweißpulver ausgewählt ist.

9. Mikrowellenrekonstituierbare Pizza nach Anspruch 7, bei welcher die Pizza zumindest teilweise gebacken ist.

10. Mikrowellenrekonstituierbare Pizza nach Anspruch 7, bei welcher die flüssige Krustenfärbesubstanz eine wäßrige Lösung aus Margarine und Instantkaffee enthält, wobei der Instantkaffee etwa 3-10 Gew.-% der Lösung ausmacht.

11. Mikrowellenrekonstituierbare Pizza nach Anspruch 7, bei welcher die flüssige Krustenfärbesubstanz Instanttee enthält, wobei der Instanttee etwa 3-10 Gew.-% der Lösung ausmacht.

12. Verfahren zum Rekonstituieren einer mikrowellenrekonstituierbaren Tiefkühlpizza in einem Mikrowellenofen mit einem unteren flachen Boden, wobei die Pizza einen vorgewählten äußeren Umfang, eine untere Kruste mit einer allgemein flachen Bodenoberfläche (10) und einer oberen allgemein flachen Oberfläche (12) parallel zur Bodenoberfläche sowie einen allgemein gekrümmten Randabschnitt (14) um den Umfang herum aufweist, welcher die parallelen Oberflächen der Kruste verbindet, dadurch gekennzeichnet, daß die Pizza einen Nahrungsmittelbelag auf der oberen Oberfläche in einem ausgewählten Bereich aufweist, der eine äußerste Umgrenzung besitzt, die mit dem Umfang allgemein zusammenpaßt, ein äußeres Krustenband (D) oberhalb der Bodenoberfläche freigibt und den Randabschnitt der Kruste enthält, wobei eine flüssige Krustenfärbesubstanz eine wäßrige Lösung eines eßbaren Dispergiermittels und eines natürlich auftretenden Färbemittels enthält, das aus der Klasse bestehend aus Kaffee, Tee, Zichorie und deren Mischungen gewählt ist, und wobei das äußere Krustenband mit der flüssigen Krustenfärbesubstanz beschichtet ist, welches Verfahren die Schritte umfaßt:
(a) Anordnen eines flachen Mikrowellensuszeptorblattes in dem Mikrowellenofen an einem Ort oberhalb und parallel zu dem unteren flachen Boden;
(b) Anordnen der Pizza auf dem Suszeptorblatt, wobei das Blatt nur die untere flache Oberfläche der Kruste berührt; und
(c) Einschalten des Mikrowellenofens, um die Tiefkühlpizza durch eine Kombination aus Mikrowellenenergie und Konvektionserhitzen durch das Suszeptorblatt an der unteren Oberfläche zu erhitzen.

13. Verfahren nach Anspruch 12, bei welchem der Schritt des Mikrowellenerhitzens das Erhitzen der Pizza über etwa 4-7 Minuten umfaßt.

14. Verfahren nach Anspruch 12, bei welchem der Mikrowellenofen eine Leistung von 600-700 Watt hat und der Schritt des Mikrowellenerhitzens das Erhitzen der Pizza über etwa 4-5 Minuten umfaßt.

15. Verfahren nach Anspruch 14, mit dem Schritt des Drehens der Pizza in dem Mikrowellenofen um zumindest eine halbe Umdrehung während des Schrittes des Mikrowellenerhitzens.

16. Verfahren nach Anspruch 14, bei welchem der Mikrowellenofen eine Leistung von 400-500 Watt hat und der Schritt des Mikrowellenerhitzens das Erhitzen der Pizza über etwa 6-7 Minuten umfaßt.

17. Verfahren nach Anspruch 16, mit dem Schritt des Drehens der Pizza in dem Mikrowellenofen um zumindest eine halbe Umdrehung während des Schrittes des Mikrowellenerhitzens.

18. Verwendung einer flüssigen Krustenfärbesubstanz, die eine wäßrige Lösung eines eßbaren Dispergiermittels und eines natürlich auftretenden Färbemittels enthält, das aus der Klasse bestehend aus Kaffee, Tee, Zichorie und deren Mischungen gewählt ist, zum Beschichten der freiliegenden Krustenbereiche eines mit Hilfe von Mikrowellen zu rekonstituierenden Tiefkühlnahrungsmittels.

19. Verwendung einer flüssigen Krustenfärbesubstanz nach Anspruch 18, bei welcher das eßbare Dispergiermittel aus der Klasse bestehend aus flüssiger Margarine, Milch, Milchpulver, Eiweiß und Eiweißpulver gewählt ist.

20. Verwendung einer flüssigen Krustenfärbesubstanz nach Anspruch 18, bei welcher die flüssige Krustenfärbesubstanz eine wäßrige Lösung aus Margarine und Instantkaffee enthält, wobei der Instantkaffee etwa 3-10 Gew.-% der Lösung ausmacht.

21. Verwendung einer flüssigen Krustenfärbesubstanz nach Anspruch 18, bei welcher die flüssige Krustenfärbesubstanz Instanttee enthält, wobei der Instanttee etwa 3-10 Gew.-% der Lösung ausmacht.

## Revendications

1. Procédé de fabrication d'une pizza congelée reconstituable par cuisson aux micro-ondes, ayant une périphérie extérieure présélectionnée, une croûte inférieure ayant une surface inférieure (10) globalement plane, une surface supérieure (12) globalement plane, parallèle à ladite surface inférieure (10) et une partie de rebord (14) globalement incurvée, autour de ladite périphérie et reliant lesdites surfaces parallèles de ladite croûte, caractérisé en ce que ledit procédé comprend les étapes consistant à :
(a) déposer une garniture alimentaire sur ladite surface supérieure (12) dans une zone sélectionnée ayant une délimitation extrême s'adaptant globalement à ladite périphérie et présentant une bande de croûte (D) extérieure au-dessus de ladite surface inférieure (10) et comprenant la partie de rebord de ladite croûte,
(b) revêtir ladite bande de croûte extérieure (D) avec une substance liquide de coloration de croûte, comprenant une solution aqueuse constituée d'un agent de dispersion comestible et d'un agent colorant naturel, sélectionné dans le groupe composé de café, thé, chicorée et leurs mélanges; et
(c) congéler la pizza en vue d'un stockage et/ou d'une expédition.

2. Procédé selon la revendication 1, dans lequel ledit agent de dispersion comestible est sélectionné dans le groupe composé de margarine liquide, de lait, de poudre de lait, de blancs d'oeuf et de poudre de blanc d'oeuf.

3. Procédé selon la revendication 1, dans lequel ladite étape de revêtement comprend la pulvérisation de ladite substance liquide de coloration de croûte sur ladite bande de croûte extérieure.

4. Procédé selon la revendication 1, comprenant l'étape supplémentaire de cuisson au moins partielle de ladite pizza, de manière que ladite substance soit évaporée et transformée pour obtenir la teinte brune souhaitée.

5. Procédé selon la revendication 1, dans lequel ladite substance liquide de coloration de croûte comprend une solution aqueuse constituée de margarine et de café instantané, ledit café instantané constituant à peu près 3 à 10 % en poids de ladite solution.

6. Procédé selon la revendication 1, dans lequel ladite substance liquide de coloration de croûte comprend du thé instantané, ledit thé instantané constituant à peu près 3 à 10 % en poids de ladite solution.

7. Pizza congelée pouvant être reconstituée par cuisson aux micro-ondes, ayant une périphérie extérieure présélectionnée, une croûte inférieure présentant une surface inférieure (10) globalement plane, une surface supérieure (12) globalement plane, parallèle à ladite surface supérieure et une partie de rebord (14) globalement incurvée, autour de ladite périphérie et reliant lesdites surfaces parallèles de ladite croûte, caractérisée en ce que ladite pizza comprend une garniture alimentaire déposée sur ladite surface supérieure (12), dans une zone sélectionnée ayant un rebord extrême s'adaptant globalement à ladite périphérie et présentant une bande de croûte extérieure (D) au-dessus de ladite surface inférieure (10) et comprenant ladite partie de rebord de ladite croûte, et une substance liquide de coloration de croûte revêtue sur ladite bande de croûte extérieure, ladite substance de coloration de croûte comprenant une solution aqueuse constituée d'un agent de dispersion comestible et d'un agent de coloration naturel, sélectionné dans le groupe composé de café, thé, chicorée et leurs mélanges.

8. Pizza pouvant être reconstituée par cuisson aux micro-ondes selon la revendication 7, dans laquelle ledit agent de dispersion comestible est sélectionné dans le groupe composé de margarine liquide, lait, poudre de lait, blancs d'oeuf et poudre de blanc d'oeuf.

9. Pizza pouvant être reconstituée par cuisson aux micro-ondes selon la revendication 7, dans laquelle ladite pizza est cuite au moins partiellement.

10. Pizza pouvant être reconstituée par cuisson aux micro-ondes selon la revendication 7, dans laquelle ladite substance liquide de coloration de croûte comprend une solution aqueuse composée de margarine et de café instantané, ledit café instantané constituant à peu près 3 à 10 % en poids de ladite solution.

11. Pizza pouvant être reconstituée par cuisson aux micro-ondes selon la revendication 7, dans laquelle ladite substance liquide de coloration de croûte comprend du thé instantané, ledit thé instantané constituant à peu près 3 à 10 % en poids de ladite solution.

12. Procédé de reconstitution d'une pizza congelée pouvant être reconstituée par cuisson aux micro-ondes, dans un four à micro-ondes ayant un plancher plat inférieur, ladite pizza ayant une périphérie extérieure présélectionnée, une croûte inférieure ayant une surface inférieure (10) globalement plane, une surface supérieure (12) globalement plane parallèle à ladite surface supérieure et une partie de rebord (14) globalement incurvée, autour de ladite périphérie et reliant lesdites surfaces parallèles de ladite croûte, caractérisé en ce que ladite pizza comprend une garniture alimentaire sur ladite surface supérieure, dans une zone sélectionnée ayant un rebord extrême s'adaptant globalement à ladite périphérie et présentant une bande de croûte (D) extérieure au-dessus de ladite surface inférieure et comprenant ladite partie de rebord de ladite croûte et une substance liquide de coloration de croûte, comprenant une solution aqueuse constituée d'un agent de dispersion comestible et d'un agent de coloration naturel sélectionné dans le groupe composé de café, thé, chicorée et leurs mélanges, ladite substance liquide de coloration de croûte étant revêtue sur ladite bande de croûte extérieure, ledit procédé comprenant les étapes de :
(a) mise en place d'une feuille plane pouvant être exposée aux micro-ondes, dans ledit four à micro-ondes en un emplacement situé au-dessus de, et parallèle audit plancher plat inférieur;
(b) mise en place de ladite pizza sur ladite feuille pouvant être exposée aux micro-ondes, ladite feuille s'engageant seulement contre ladite surface plane inférieure de ladite croûte; et
(c) activation dudit four à micro-ondes pour chauffer ladite pizza congelée par la combinaison d'une énergie à hyperfréquence et d'un chauffage par convection par ladite feuille pouvant être exposée aux micro-ondes, au niveau de ladite surface inférieure seulement.

13. Procédé selon la revendication 12, dans lequel ladite étape de chauffage aux micro-ondes comprend le chauffage de ladite pizza pendant à peu près 4 à 7 minutes.

14. Procédé selon la revendication 12, dans lequel ledit four à micro-ondes présente une puissance nominale de 600 à 700 Watts et ladite étape de chauffage aux micro-ondes comprend le chauffage de ladite pizza pendant à peu près 4 à 5 minutes.

15. Procédé selon la revendication 14, comprenant les étapes de rotation de ladite pizza dans ledit four à micro-ondes, d'au moins à peu près 1/2 tour durant ladite étape de chauffage aux micro-ondes.

16. Procédé selon la revendication 14, dans lequel ledit four à micro-ondes présente une puissance nominale de 400 à 500 Watts et ladite étape de chauffage aux micro-ondes comprend le chauffage de ladite pizza pendant à peu près 6 à 7 minutes.

17. Procédé selon la revendication 16, comprenant les étapes de rotation de ladite pizza dans ledit four à micro-ondes, d'au moins à peu près 1/2 tour durant ladite étape de chauffage aux micro-ondes.

18. Utilisation d'une substance liquide de coloration de croûte comprenant une solution aqueuse constituée d'un agent de dispersion comestible et d'un agent de coloration naturel sélectionné dans le groupe composé de café, thé, chicorée et leurs mélanges, à revêtir sur les zones de croûte exposées d'un produit alimentaire congelé de type à croûte, devant être reconstitué aux micro-ondes.

19. Utilisation d'une substance liquide de coloration de croûte selon la revendication 18, dans laquelle ledit agent de dispersion comestible est sélectionné dans le groupe composé de margarine liquide, lait, poudre de lait, blancs d'oeuf et poudre de blanc d'oeuf.

20. Utilisation d'une substance liquide de coloration de croûte selon la revendication 18, dans laquelle ladite substance liquide de coloration de croûte comprend une solution aqueuse composée de margarine et de café instantané, ledit café instantané constituant à peu près de 3 à 10 % en poids de ladite solution.

21. Utilisation d'une substance liquide de coloration de croûte selon la revendication 18, dans laquelle ladite substance liquide de coloration de croûte comprend du thé instantané, ledit thé instantané constituant à peu près de 3 à 10 % en poids de ladite solution.
